# EUROPEAN PATENT SPECIFICATION

(11) **EP 2 110 391 B1**
(45) Date of publication and mention of the grant of the patent: **10.07.2013**
(21) Application number: 08703640.6
(22) Date of filing: 22.01.2008
(51) Int. Cl.: C08F 220/22, C08F 220/26, C09K 3/18, D06M 15/277

(54) **FLUORINE-CONTAINING COPOLYMER HAVING EXCELLENT WASHING RESISTANCE AND SOIL RELEASE AGENT**
FLUORHALTIGES COPOLYMER MIT HERVORRAGENDER WASCHRESISTENZ UND SOIL-RELEASE-MITTEL
COPOLYMÈRE CONTENANT DU FLUOR DOTÉ D'UNE EXCELLENTE RÉSISTANCE AU LAVAGE ET AGENT D'ÉLIMINATION DES SALISSURES

(30) Priority: 02.02.2007 JP 2007023666
(43) Date of publication of application: 21.10.2009
(73) Proprietor: Daikin Industries, Ltd., Osaka 530-8323 (JP)
(72) Inventor: UESUGI, Norimasa, Settsu-shi Osaka 566-8585 (JP)
(74) Representative: HOFFMANN EITLE
(86) International application number: PCT/JP2008/050796
(87) International publication number: WO 2008/093567

(56) References cited:
- EP-A1- 1 174 484
- EP-A2- 0 241 127
- WO-A1-03/054284
- WO-A1-2007/007743
- WO-A1-2007/007743
- JP-A- 03 103 411
- JP-A- 03 126 771
- JP-A- 05 009 414
- JP-A- 07 238 118
- JP-A- 09 165 420
- JP-A- 09 188 727
- JP-A- 10 045 993
- JP-A- 10 109 034

## Description

### TECHNICAL FIELD

The present invention relates to a fluorine-containing copolymer which imparts excellent oil repellency, stain-proofing properties and soil releasability to a treated article such as a textile, and is also excellent in washing-durability of oil repellency, stain-proofing properties and soil releasability and the composition thereof.

### BACKGROUND ART

As a stain-proofing agent which imparts water-and oil-repellency to fiber woven fabrics and the like, and also enables easy removal of stains adhered on fibers through washing, a fluorine-containing copolymer of a (meth)acrylate ester having a fluoroalkyl group (hereinafter also referred to as a fluorine-containing compound) and a hydrophilic group-containing compound is known (cf. JP-A-53-134786, JP-A-59-204980 and JP-A-62-77782).

However, fiber woven fabrics and the like treated with these fluorine-containing copolymers do not always have satisfactory washing durability and also have a tendency of failing to have sufficient and satisfactory soil releasability against persistent soils (for example, waste oil such as used engine oil).
It is considered that oil repellency and flip-flop properties are important so as to obtain sufficient soil releasability and, in air, perfluoroalkyl groups (hereinafter abbreviated as Rf groups) are oriented on the surface so that high oil repellency is exhibited. In contrast, in water, Rf groups retract and hydrophilic groups are oriented on the surface, and thus soils are easily released. Flip-flop properties are properties that a surface molecular structure varies depending on the environment in air and water, and are proposed by Sherman et al. [P. Sherman, S. Smith, B, Johannessen, Textile Research Journal, 39, 499 (1969)].
When the Rf group has a short chain length, oil repellency tends to deteriorate as crystallinity of Rf decreases and an article to be treated is easily contaminated with oil soils. Therefore, a stain-proofing agent having Rf group containing at least 8 carbon atoms has been substantially used (cf. JP-A-53-134786 and JP-A-2000-290640).

JP-A-2004-526042 (corresponding to WO02/090402) discloses a fluorine-containing polymer comprising a fluorinated monomer, a monomer containing an oxyethylene chain, a cation-donating monomer as well as N-hydroxyalkyl acrylamide and/or oxyethylene chain-containing di(meth)acrylate which is a fourth monomer.
U.S. Patent No. 6326447 discloses a fluorine-containing polymer comprising a fluorinated monomer, a cation-donating monomer and glycidyl (meth)acrylate and/or 3-chloro-2-hydroxypropyl (meth)acrylate which is a third monomer.
W02005/090423 (corresponding to EP1728806 A1) discloses a fluorine-containing polymer comprising a fluorine-containing monomer, an oxyalkylene-chain containing monomer and a cation-donating monomer.
However, the fluorine-containing polymers disclosed in JP-A-2004-526042, U.S. Patent No. 6326447 and W02005/0907423 have such disadvantages that washing-durability of oil repellency, stain-proofing properties and soil releasability are inferior.

Recently, as to compounds containing Rf group having 8 carbon atoms which are prepared by telomerization, the Federal Register (FR Vol. 68, No. 73/April 16, 2003 [FRL-2303-8]) (http://www.epa.gov/opptintr/pfoa/pfoafr.pdf), EPA Environmental News FOR RELEASE MONDAY APRIL, 2003, "EPA INTENSIFIES SCIENTIFIC INVESTIGATION OF A CHEMICAL PROCESSING AID" (http://www.epa.gov/opptintr/pfoa/pfoaprs.pdf), and EPA OPPT FACT SHEET April 14, 2003 (http://www.epa.gov/opptintr/ptoa/pfoafacts.pdf) announced that a "telomer" may possibly metabolize or decompose to perfluorooctanoic acid (hereinafter abbreviated as PFOA).
EPA (Environmental Protection Agency of USA) announced that the EPA intensifies the scientific investigation on PFOA (cf. EPA Report "PRELIMINARY RISK ASSESSMENT OF THE DEVELOPMENTAL TOXICITY ASSOCIATED WITH EXPOSURE TO PERFLUOROOCTANOIC ACID AND ITS SALTS" (http://www.epa.gov/opptintr/pfoa/pfoara.pdf)).

[Patent Document 1] JP-A-53-134786
[Patent Document 2] JP-A-59-204980
[Patent Document 3] JP-A-62-7782
[Patent Document 4] JP-A-2000-290640
[Patent Document 5] JP-A-2004-526042
[Patent Document 6] US Patent No. 6326447
[Patent Document 7] WO2005/090423

Document WO 2007/007743 relates to compositions which are used to treat textile articles, comprising a fluorine monomer (a) and a polyalkyleneglycol (meth)acrylate monomer (b). According to WO 2007/007743 the composition can comprise one or more additional monomers (c).

### DISCLOSURE OF THE INVENTION

### Problems to be Solved by the Invention

An object of the present invention is to provide a soil release agent which, while maintaining washing durability, imparts excellent oil repellency, stain resistance and soil releasability to a substrate such as a fiber woven fabric, in particular to a natural fiber or a mixture fiber including cotton, and also to provide a soil release agent which is similarly excellent even if the number of carbon atoms of an Rf group is decreased to smaller than 8 which is smaller in comparison with the prior art.

### MEANS FOR SOLVING THE PROBLEMS

The present invention provides a fluorine-containing copolymer comprising repeated units derived from
(a) a fluorine-containing monomer having a fluoroalkyl group,
(b) a polyalkyleneglycol (meth)acrylate,
(c) a monomer having an acetoacetyl group, and
(d) a monomer having a cation-donating group,
as the necessary components thereof.
In addition, the present invention provides a composition comprising the fluorine-containing copolymer (I) and a crosslinking agent (II) as the necessary components.
The fluorine-containing copolymer of the present invention works as an active component of a soil release agent.

### EFFECTS OF THE INVENTION

According to the present invention, an improved treatment or process, which imparts excellent oil repellency, soil resistance and soil releasability to textiles and which is also excellent in washing durability of oil repellency, soil resistance and soil releasability, can be obtained. In particular, the improved effects are remarkable for natural fibers such as cotton fibers, or mixture fibers thereof.
Also, the above-mentioned excellent soil release agent is obtained, even if the number of carbon atoms of a perfluoroalkyl group in the fluorine-containing copolymer is less than 8.
In the prior art, when the Rf group has less than 8 carbon atoms, soil releasability are deteriorated. To the contrary, in the present invention, even if a polymerizable monomer having an Rf group having less than 8 carbon atoms is used, high flip-flop properties and oil repellency in air are maintained and excellent soil releasability is obtained.

### BEST MODE OF CARRYING OUT THE INVENTION

The fluorine-containing copolymer of the present invention comprises:
(A) repeating units derived from fluorine-containing monomer (a),
(B) repeating units derived from polyalkyleneglycol (meth)acrylate (b),
(C) repeating units derived from the monomer having an acetoacetyl group (c), and
(D) repeating units derived from the monomer having a cation-donating group (d), as the necessary components thereof.
If necessary, the fluorine-containing copolymer of the present invention may further comprise (E) repeating units derived from (e) a monomer which is other than the monomers (a), (b), (c) and (d), and which has an unsaturated double bond copolymerizable with the monomers (a), (b), (c) and (d).
Generally, each of the monomers (b), (c), (d) and (e) contains no fluorine atom.

The repeating unit (A) is preferably derived from the fluorine-containing monomer (a) represented by the general formula:

CH₂-C(-X)-C(=O)-Y-Z-Rf (1)

wherein
X is a hydrogen atom, a linear or branched alkyl group having 1 to 21 carbon atoms, a fluorine atom, a chlorine atom, a bromine atom, an iodine atom, a CFX¹X² group (where each of X¹ and X² is a hydrogen atom, a fluorine atom, a chlorine atom or an iodine atom),
a cyano group, a linear or branched fluoroalkyl group having 1 to 21 carbon atoms, a substituted or unsubstituted benzyl group or a substituted or unsubstituted phenyl group;
Y is -O- or -NH-;
Z is an aliphatic group having 1 to 10 carbon atoms, an aromatic or cycloaliphatic group having 6 to 18 carbon atoms, -CH₂CH₂N(R¹)SO₂- group (wherein R¹ is an alkyl group having 1 to 4 carbon atoms),
-CH₂CH(OZ¹)CH₂- group (wherein Z¹ is a hydrogen atom or an acetyl group),
- (CH₂)ₘ-SO₂- (CH₂)ₙ- group, or a - (CH₂)ₘ₋S-(CH₂) group (wherein m is 1 to 10 and n is 0 to 10),
Rf is a linear or branched fluoroalkyl group having 1 to 21 carbon atoms.

The fluorine-containing monomer (a) may be substituted with a halogen atom or the like at the alpha-position (of acrylate or methacrylate). Therefore, in the formula (1), X may be a linear or branched alkyl group having 2 to 21 carbon atoms, a fluorine atom, a chlorine atom, a bromine atom, an iodine atom, a CFX¹X² group (wherein X¹ and X² represent a hydrogen atom, a fluorine atom, a chlorine atom, a bromine atom or an iodine atom), a cyano group, a linear or branched fluoroalkyl group having 1 to 21 carbon atoms, a substituted or an unsubstituted benzyl group, or a substituted or an unsubstituted phenyl group.

In the formula (1), the Rf group is preferably a perfluoroalkyl group. The carbon number of the Rf group may be from 1 to 10, for example, from 1 to 8, particularly from 1 to 6, especially 4 or 6. Examples of the Rf group include -CF₃, -CF₂CF₃, -CF₂CF₂CF₃, -CF(CF₃)₂, -CF₂CF₂CF₂CF₃, -CF₂CF(CF₃)₂, -C(CF₃)₃, -(CF₂)₄CF₃, -(CF₂)₂CF(CF₃)₂, -CF₂C(CF₃)₃, -CF(CF₃)CF₂CF₂CF₃, -(CF₂)₅CF₂, -(CF₂)₃CF(CF₃)₂, -(CF₂)₄CF(CF₃)₂, -(CF₂)₇CF₃, -(CF₂)₅CF(CF₃)₂, -(CF₂)₆CF(CF₃)₂, and -(CF₂)₉CF₃.

Specific examples of the fluorine-containing monomer (a) include, but are not limited to, the followings:
CH₂=C(-H)-C(=O)-O-(CH₂)₂-Rf
CH₂=C(-H)-C(=O)-O-C₆H₄-Rf
CH₂=C(-Cl)-C(=O)-O-(CH₂)₂-Rf
CH₂=C(-H-C(=O)-O-(CH₂)₂N(-CH₃)SO₂-Rf
CH₂=C(-H)-C(=O)-O-(CH₂)₂N(-C₂H₅)SO₂-Rf
CH₂=C(-H)-C(=O)-O-CH₂CH(-OH)CH₂-Rf

CH₂=C(-H)-C(=O)-O-CH₂CH(-OCOCH₃)CH₂-Rf
CH₂=C(-H)-C(=O)-O-(CH₂)₂-S-Rf
CH₂=C(-H)-C(=O)-O-(CH₂)₂-S-(CH₂)₂-Rf
CH₂=C(-H)-C(=O)-O-(CH₂)₃-SO₂-Rf
CH₂=C(-H)-C(=O)-O-(CH₂)₂-SO₂-(CH₂)₂-Rf
CH₂=C(-H)-C(=O)-NH-(CH₂)₂-Rf
CH₂=C(-(CH₃)-C(=O)-O-(CH₂)₂-S-Rf
CH₂=C(-CH₃)-C(=O)-O-(CH₂)₂-S-(CH₂)₂-Rf
CH₂=C(-CH₃)-C(=O)-O-(CH₂)₃-SO₂-Rf
CH₂=C(-CH₃)-C(=O)-O-(CH₂)₂-SO₂-(CH₂)₂-Rf
CH₂=C(-CH₃)-C(=O)-NH-(CH₂)₂-Rf

CH₂=C(-F)-C(=O)-O-(CH₂)₂-S-Rf
CH₂=C(-F)-C(=O)-O-(CH₂)₂-S-(CH₂)₂-Rt
CH₂=C(-F)-C(=O)-O-(CH₂)₂-SO₂-ref
CH₂=C(-F)-C(=O)-O-(CH₂)₂-SO₂-(CH₂)₂-Rf
CH₂=C(-F)-C(=O)-NH-(CH₂)₂₋Rf
CH₂=C(-Cl)-C(=O)-O-(CH₂)₂-S-Rf CH₂=C(-Cl)-C(=O)-O-(CH₂)₂-S-(CH₂)₂-Rf CH₂=C(-Cl)-C(=O)-O-(CH₂)₂-SO₂-Rf CHz=C(-Cl)-C(=O)-O-(CH₂)₂-SC₂-(CH₂)₂-Rf CH₂=C(-Cl)-C(=O)-NH-(CH₂)₂-Rf

CH₂=C(-CF₃)-C(=O)-O-(CH₂)₂-S-Rf
CH₂=C(-CF₃)-C(=O)-O-(CH₂)₂-S-(CH₂)₂-Rf
CH₂=C(-CF₃)-C(=O)-O-(CH₂)₂-SO₂-Rf
CH₂=C(-CF₃)-C(=O)-O-(CH₂)₂-SO₂-(CH₂)₂-Rf
CH₂=C(-CF₃)-C(=O)-NH-(CH₂)₂-Rf
CH₂=C(-CF₂H)-C(=O)-O-(CH₂)₂-S-Rf
CH₂=C(-CF₂H)-C(=C)-O-(CH₂)₂-S-(CH₂)₂-Rf
CH₂₌C(-CF₂H)-C(=O)-O-(CH₂)₂-SO₂-Rf
CH₂=C(-CF₂H)-C(=O)-O-(CH₂)₂-SO₂-(CH₂)₂-Rf
CH₂=C(-CF₂H)-C(=O)-NH-(CH₂)₂-Rf
CH₂=C(-CN)-C(=O)-O-(CH₂)₂-S-Rf
CH₂=C(-CN)-C(=O)-O-(CH₂)₂-S-(CH₂)₂-Rf
CH₂=C(-CN)-C(=O)-O-(CH₂)₂-SO₂-Rf
CH₂=C(-CN)-C(=O)-O-(CH₂)₂-SO₂-(CH₂)₂-Rf
CH₂=C(-CN)-C(=O)-NH-(CH₂)₂-Rf

CH₂=C(-CF₂CF₃)-C(=O)-O-(CH₂)₂-S-Rf
CH₂=C(-CF₂CF₃)-C(=O)-O-(CH₂)₂-S-(CH)₂-Rf
CH₂=C(-CF₂CF₃)-C(=O)-O-(CH₂)₂-SO₂-Rf
CH₂=C(-CF₂CF₃)-C(=O)-O-(CH₂)₂-SO₂-(CH₂)₂-Rf
CH₂=C(-CF₂CF₃)-C(=O)-NH-(CH₂)₂-Rf
CH₂=C(-F)-C(=O)-O-(CH₂)₃-S-Rf
CH₂=C(-F)-C(=O)-O-(CH₂)₃-S-(CH₂)₂-Rf
CH₂=C(-F)-C(=O)-O-(CH₂)₃-SO₂-Rf
CH₂=C(-F)-C(=O)-O-(CH₂)₃-SO₂-(CH₂)₂-Rf
CH₂=C(-F)-C(=O)-NH-(CH₂)₃-Rf

CH₂=C(-Cl)-C(=O)-O-(CH₂)₃-S-Rf
CH₂=C(-Cl)-C(=O)-O-(CH₂)₃-S-(CH₂)₂-Rf
CH₂=C(-Cl) -C(=O)-O-(CH₂)₃-SO₂-Rf
CH₂=C(-Cl)-C(=O)-O-(CH₂)₃-SO₂-(CH₂)₂-Rf
CH₂=C(-CF₃)-C(=O)-O-(CH₂)₃-S-Rf
CH₂=C(-CF₃)-C(=O)-O-(CH₂)₃-S-(CH₂)₂-Rf
CH₂=C(-CF₃)-C(=O)-O-(CH₂)₃-SO₂-Rf
CH₂=C(-CF₃-C(=O)-O-(CH₂)₃-SO₂-(CH₂)₂-Rf
CH₂=C(-CF₂H)-C(=O)-O-(CH₂)₃-S-Rf
CH₂=C(-CF₂H-C(=O)-O-(CH₂)₃-S-(CH₂)₂-Rf
CH₂=C(-CF₂H)-C(=O)-O-(CH₂)₃-SO₂-Rf
CH₂=C(-CF₂H)-C(=O)-O-(CH₂)₃-SO₂-(CH₂)₂-Rf

CH₂=C(-CN)-C(=O)-O-(CH₂)₃-S-Rf
CH₂=C(-CN)-C(=O)-O-(CH₂)₃-S-(CH₂)₂-Rf
CH₂=C(-CN)-C(=O)-O-(CH₂)₃-SO₂-Rf
CH₂=C(-CN)-C(-O)-O-(CH₂)₃-SO₂-(CH₂)₂-Rf
CH₂=C(-CF₂CF₃)-C(=O)-O-(CH₂)₃-S-Rf
CH₂=C(-CF₂CF₃)-C(=O)-O-(CH₂)₃-S-(CH₂)₂-Rf
CH₂=C(-CF₂CF₃)-C(=O)-O-(CH₂)₃-SO₂-Rf
CH₂=C(-CF₂CF₃)-C(=O)-O-(CH₂)₂-SO₂-(CH₂)₂-Rf
wherein Rf is a fluoroalkyl group having 1 to 21, particularly 1 to 6 carbon atoms.
The component (a) may be a mixture of at least two.
The amount of the monomer (a) may be 18 to 88% by weight, for example, 50 to 80% by weight, based on the fluorine-containing copolymer.

The component (b) may be polyalkyleneglycol mono(meth)acrylate and/or polyalkyleneglycol di (meth) acrylate. The molecular weight of the component (b) may be at least 200, for examples, at least 400. The upper limit of the molecular weight of the component (b) may be 200,000, and particularly 20,000.
Preferably, the polyalkyleneglycol mono(meth)acrylate and the polyalkyleneglycol di(meth)acrylate are represented by the general formula:

CH₂=CX¹C(=O)-O-(RO)ₙ-X² (3a)

and

CH₂=CX¹C(=O)-O-(RO)ₙ-C(=O)CX¹=CH₂ (3b)

wherein
X¹ is a hydrogen atom or a methyl group,
X² is a hydrogen atom or an unsaturated or saturated hydrocarbon group having 1 to 22 carbon atoms,
R is an alkylene group having 2 to 6 carbon atoms, and
n is an integer from 2 to 90.
In the above, "n" may be particularly from 2 to 30, for example, from 2 to 20.

In the component (b), R in general formulae (3a) and (3b) is particularly preferably an ethylene group.
In the component (b), R in general formulae (3a) and (3b) may be a combination of at least two types of alkylene groups. In this case, at least one R is preferably an ethylene group. Examples of the combination of R include a combination of ethylene group/propylene group and a combination of ethylene group/butylene group.
The component (b) may be a mixture of at least two types. In this case, the component (b) is preferably a mixture in which at least one R in general formulae (3a) and (3b) is an ethylene group.
When the polyalkyleneglycol di(meth)acrylate represented by the general formula (3b) is used as the component (b), use of the component (3b) alone is not preferable, and use of the component (3b) together with the component (3a) is preferable. In such case, the amount of the compound represented by the general formula (3b) is preferably limited to smaller than 30% by weight, based on the used component (b).
The amount of the component (b) may be from 10 to 80% by weight, preferably from 15 to 50% by weight, based on the fluorine-containing copolymer. When the amount of the component (b) is from 10 to 80% by weight, high oil repellency and soil releasability are imparted.

Specific examples of the component (b) include the followings, to which the components (b) is not limited.
CH₂=CHCOO-(CH₂CH₂O)₉-H
CH₂=C(CH₃)COO-(CH₂CH₂O)₉-H
CH₂=C(CH₃)COO-(CH₂CH₂O)₅-CH₃
CH₂=C(CH₃)COO-(CH₂CH₂O)₉-CH₃
CH₂=C(CH₃)COO-(CH₂CH₂O)₂₃-CH₃
CH₂=C(CH₃)COO-(CH₂CH₂O)₉₀-CH₃
CH₄=C(CH₃)COO-(CH₂CH(CH₃)O)₉-H
CH₂=CHCOO-(CH₂CH(CH₃)O)₉-H

CH₂=C(CH₃)COO-(CH₂CH(CH₃)O)₉-CH₃
CH₂=C(CH₃)COO-(CH₂CH(CH₃)O)₁₂-CH₃
CH₂=C(CH₃)COO-(CH₂CH₂O)₅-(CH₂CH(CH₃)O)₂-H
CH₂=C(CH₃)COO-(CH₂CH₂O)₅-(CH₂CH(CH₃)O)₃-CH₃
CH₂=C(CH₃)COO-(CH₂CH₂O)₈-(CH₂CH(CH₃)O)₆-CH₂CH(C₂H₅)C₄H₉
CH₂=C(CH₃)COO-(CH₂CH₂O)₂₃-OOC(CH₃)C=CH₂
CH₂=C(CH₃)COO-(CH₂CH₂O)₂₀-(CH₂CH(CH₃)O)₅-CH₂-CH=CH₂

Examples of the component (c) include a compound having an acetoacetyl group and a carbon-carbon double bond. The acetoacetyly group in the component (c) imparts a better adhesion property to the substrate to be treated and has good reactivity with a crosslinking agent (for example, an isocyanate compound) because of having an active methylene group in the molecule thereof, thereby improves washing-durability. The amount of the component (c) is preferably from 0.5 to 10% by weight, based on the fluorine-containing copolymer. When the amount of the component (b) is from 0.5 to 10% by weight, initial soil releasability and washing-durability are particularly high.
Specific examples of the component (c) include acetoacetoxyethyl acrylate, acetoacetoxyethyl methacrylate, acetoacetoxypropyl acrylate, acetoacetoxypropyl methacrylate, N-(2-acetoacetoxyethyl) acrylamide, N-(2-acetoacetoxyethyl) methacrylamide, vinyl acetoacetate and allyl acetoacetate. Acetoacetoxyethyl (meth)acrylate and acetoacetoxypropyl (meth)acrylate are preferable.

Examples of the cation-donating group in the component (d) are tertiary amino group and quaternary amino group.
Two groups attached to a nitrogen atom in the tertiary amino group may be the same or different and preferably are an aliphatic group (particularly, an alkyl group) having 1 to 5 carbon atoms, an aromatic group (an aryl group) having 6 to 20 carbon atoms or an araliphatic group having 7 to 25 carbon atoms (particularly an aralkyl group, for example, a benzyl group (C₆H₆-CH₂-)).
Three groups attached to a nitrogen atom in the quaternary amino group may be the same or different and preferably are an aliphatic group having 1 to 5 carbon atoms (particularly an alkyl group), an aromatic group (an aryl group) having 6 to 20 carbon atoms or an araliphatic group having 7 to 25 carbon atoms (particularly aralkyl group). In the tertiary amino groups and the quaternary amino groups, a remaining group attached to the nitrogen atom may have a carbon-carbon double bond.
Examples of the component (d) include a compound having a cation-donating group and a carbon-carbon double bond. The compounds of the component (d) not only impart cationic property to the fluorine-containing copolymer, thereby improve compatibility with fiber which is a substrate to be treated, but also act as a catalyst in the reaction between the component (c) and the isocyanate compound to promote the reaction. Accordingly, the adhesion of a fluorine-containing copolymer coating with the substrate is improved, thereby the washing-durability is remarkably improved.
Further, when the fluorine-containing copolymer is used as an aqueous dispersion, it is possible to impart self-emulsifiability to the fluorine-containing copolymer, since the strong hydrophilicity thereof causes the fluorine-containing copolymer to be easily dispersed in water.
The amount of the component (d) may be from 0.1 to 10% by weight, preferably from 0.5 to 5% by weight, based on the fluorine-containing copolymer. When the amount of the component (d) is from 0.1 to 10% by weight, initial soil releasability is particularly high.

Specific examples of the component (d) include the followings, to which the components (b) is not limited:
CH₂=CHCOO-CH₂CH₂-N(CH₃)₂ and a salt thereof (for example, an acetate salt)
CH₂=CHCOO-CH₂CH₂-N(CH₂CH₃)₂ and a salt thereof (for example, an acetate salt)
CH₂=C(CH₃)COO-CH₂CHₛ-N(CH₃)₂ and a salt thereof (for example, an acetate salt)
CH₂=C(CH₃)COO-CH₂CH₂-N(CH₂CH₃)₂ and a salt thereof (for example, an acetate salt)
CH₂=CHC(O)N(H)-CH₂CH₂CH₂-N(CH₃)₂ and a salt thereof (for example, an acetate salt)
CH₂=CHCOO-CH₂CH₂-N(-CH₃) (-CH₂-C₆H₅) and a salt thereof (for example, an acetate salt)
CH₂=C(CH₃)COO-CH₂CH₂-N(-CH₂CH₃) (-CH₂-C₆H₅) and a salt thereof (for example, an acetate salt)
CH₂=CHCOO-CH₂CH₂-N⁺(CH₃)₃Cl⁻
CH₂=CHCOO-CH₂CH₂-N+(-CH₃)₂(-CH₂-C₆H₅)Cl⁻
CH₂=C(CH₃)COO-CH₂CH₂-N⁺(CH₃)₃Cl⁻
CH₂=CHCOO-CH₂CH(OH)CH₂-N⁺(CH₃)₃Cl⁻
CH₂=C(CH₃)COO-CH₂CH(OH)CH₂-N⁺(CH₃)₃Cl⁻
CH₂=C(CH₃)COO-CH₂CH(OH)CH₂-N⁺(-CH₂CH₃)₂(-CH₂-C₆H₅)Cl⁻
CH₂=C(CH₃)COO-CH₂CH₂-N⁺(CH₃)₃Br⁻
CH₂=C(CH₃)COO-CH₂CH₂-N⁺(CH₃)₃I⁻
CH₂=C(CH₃)COO-CH₂CH₂-N⁺(CH₃)₃OSO₃CH₃
CH₂=C(CH₃)COO-CH₂CH₂-N⁺(CH₃)(-CH₂-C₆H₅)₂Br⁻

The salt is a salt with an acid (which is an organic acid or an inorganic acid). The organic acid, for example, a carboxylic acid having 1 to 20 carbon atoms (particularly a monocarboxylic acid, such as acetic acid, propionic acid, butyric acid and stearic acid) is preferable.
Dimethylaminoethyl (meth)acrylate and diethylaminoethyl (meth)acrylate and salts thereof are preferable.

For the purpose of improving durable soil releasability, solubility in an organic solvent, flexibility and adhesion to a treated substrate, another polymerizable monomer [that is, a component (e)], particularly a fluorine-free monomer may be introduced into the fluorine-containing copolymer of the present invention.
The copolymerization proportion of the component (e) may be from 0 to 20% by weight, and preferably from 0 to 10% by weight, for example, 0.1 to 5% by weight, based on the fluorine-containing copolymer. The component (e) may be a mixture of at least two types.

Specific examples of the component (e) include, but are not limited to, diacetone acrylamide, (meth)acrylamide, N-methylol acrylamide, hydroxyethyl (meth)acrylate, 3-chloro-2-hydroxypropyl (meth)acrylate, butadiene, chloroprene, glycidyl (meth)acrylate, maleic acid derivatives, vinyl halides such as vinyl chloride, ethylene, vinylidene halides such as vinylidene chloride, vinyl alkyl ethers, glycerol (meth)acrylate, styrene, alkyl (meth)acrylate, vinylpyrrolidone, and isocyanate group-containing (meth)acrylates such as 2-isocyanatoethyl methacrylate or (meth)acrylates having an isocyanate group blocked with a blocking agent such as methyl ethyl ketoxime.

The weight-average molecular weight of the fluorine-containing copolymer of the present invention may be from 1,000 to 1,000,000, and preferably from 5,000 to 500,000. When the weight-average molecular weight is from 1,000 to 1,000,000, high soil releasability is obtained while maintaining durability, and a polymer liquid has low viscosity to be easily handled. The weight-average molecular weight is measured by a gel permeation chromatography in terms of polystyrene.

The fluorine-containing copolymer (I) of the present invention itself is an excellent soil release agent. When the fluorine-containing copolymer (I) is used in combination with a crosslinking agent (II), the property, particularly the washing-durability is remarkably improved.
The crosslinking agent (II) is a compound having a group reacting with active hydrogen in the fluorine-containing copolymer (I). Examples of the group reacting with active hydrogen are an isocyanate group, a glycidyl group, a group represented by the formula: -CH₂-O-R wherein R is a hydrogen atom or an aliphatic group (particularly an alkyl group) having 1 to 10 carbon atoms (particularly a methylol group). The crosslinking agent is preferably free of carbon-carbon double bond. The number of the group reacting with active hydrogen in the crosslinking agent (II) may be at least two, for example, from 2 to 5, particularly 2 or 3.
Examples of the crosslinking agent (II) are a compound having an isocyanate group and/or a blocked isocyanate group, a compound having a glycidyl group, and a compound having -CH₂-O-R group.
Specific examples of the compound having an isocyanate group and/or blocked isocyanate group include tolylene diisocyanate, hexamethylene diisocyanate, isophorone diisocyanate, diphenylmethane diisocyanate, lysine diisocyanate, naphthylene diisocyanate, tolylene diisocyanate, xylylene diisocyanate, hydrogenated diphenylmethane diisocyanate, polyisocyanates such as a trimer of hexamethylene diisocyanate, adducts of polyisocyanate with monoalcohol or polyalcohol, and blocked isocyanates wherein polyisocyanate is blocked with oxide, phenol, alcohol and the like, to which the compounds are not limited.

Specific examples of the compound having a glycidyl group include diglycidyl ether of glycol, di- and poly-glycidyl ether of polyol, diglycidyl ester of dicarboxylic acid, bisphenol-type (A-, F-, S-, K-type) diglycidyl ether resin which is a reaction product of epichlorohydrin with bisphenol (such as bisphenol A, bisphenol F, bisphenol S and bisphenol K), naphthalene-type diglycidyl ether resin, biphenyl diglycidyl ether resin, and novolac-type diglycidyl ether resin.
Specific examples of the compounds having the -CH₂-O-R group include melamine derivatives such as trimethylol melamine, trimethylol melamine wherein hydrogen atoms at methylol end are substituted with methyl groups, and melamine resin having at least two methylol groups.
When the crosslinking agent (II) is an isocyanate or a melamine, the acetoacetyl group in the monomer (c) has two reaction sites of the active methylene group and the carbonyl group, so that the crosslinking agent (II) successfully reacts with the monomer (c).

The amount of the crosslinking agent (II) may be from 3 to 30 parts by weight, preferably from 3 to 15 parts by weight, based on 100 parts by weight of the fluorine-containing copolymer. When the amount is from 3 to 30 parts by weight, sufficient crosslinking can be obtained, washing-durability is improved, a cured coating film has sufficient flexibility, and high soil releasability can be obtained.

The copolymer of the present invention may be a random copolymer or a block copolymer.
A polymerization method of producing the copolymer of the present invention is not limited. Various polymerization methods such as a bulk polymerization, a solution polymerization, an emulsion polymerization and a radiation polymerization can be selected. For example, a solution polymerization using an organic solvent and an emulsion polymerization using water or both an organic solvent and water are generally selected. A treatment liquid is produced by diluting a reaction mixture with water or adding an emulsifying agent to make the emulsification after the polymerization.
Examples of the organic solvent include ketones such as acetone and methyl ethyl ketone; esters such as ethyl acetate and methyl acetate; glycols such as propylene glycol, dipropylene glycol monomethyl ether, dipropylene glycol, tripropylene glycol and low molecular weight polyethylene glycol; and alcohols such as ethyl alcohol and isopropanol.
As the emulsifying agent for the emulsion polymerization and for emulsification in water by adding the emulsifying agent after polymerization, various conventional emulsifying agents such as an anionic emulsifying agent, a cationic emulsifying agent and a nonionic emulsifying agent can be used.

As the polymerization initiator, for example, a peroxide, an azo compound or a persulfuric acid-based compound can be used. The polymerization initiator is generally water-soluble and/or oil-soluble.
Specific examples of the oil-soluble polymerization initiator are preferably 2,2'-azobis(2-methylpropionitrile), 2,2'-azobis(2-methylbutyronitrile), 2,2'-azobis(2,4-dimethylvaleronitrile), 2,2'-azobis(2,4-dimethyl-4-methoxyvaleronitrile), 1,1'-azobis(cyclohexane-1-carbonitrile), dimethyl 2,2'-azobis(2-methylpropionate), 2,2'-azobis(2-isobutyr.onitrile), benzoyl peroxide, di-tertiary-butyl peroxide, lauryl peroxide, cumene hydroperoxide, t-butyl peroxypivalate, diisopropyl peroxydicarbonate, and t-butyl perpivalate.

Specific examples of the water-soluble polymerization initiator are preferably 2,2'-azobisisobutylamidine dihydrochloride, 2,2'-azobis(2-methylpropionamidine) hydrochloride, 2,2'-azobis[2-(2-zmidazolin-2-yl)propane] hydrochloride, 2,2'-azobis[2-(2-imidazolin-2-yl)propane] sulfate hydrate, 2,2'-azobis[2-(5-methyl-2-imidazolin-2-yl) propane] hydrochloride, potassium persulfate, barium persulfate, ammonium persulfate, and hydrogen peroxide.
The polymerization initiator is used in an amount within a range from 0.01 to 5 parts by weight, based on 100 parts by weight of the monomer.
For the purpose of adjusting the molecular weight, a known mercapto group-containing compound may be used. Specific examples thereof include 2-mercaptoethanol, thiopropionic acid, and alkyl mercaptan. The mercapto group-containing compound may be used in an amount of 5 parts by weight or less, within a range from 0.01 to 3 parts by weight, based on 100 parts by weight of the monomer.

Specifically, a copolymer can be produced in the following manner.
In a solution polymerization, it is possible to employ a method of dissolving a monomer in an organic solvent in the presence of a polymerization initiator, replacing the atmosphere by nitrogen and stirring the solution with heating at a temperature within a range from 50 to 120°C for 1 to 10 hours. The polymerization initiator generally may be an oil-soluble polymerization initiator. Examples of the organic solvent include ketones such as acetone and methyl ethyl ketone; esters such as ethyl acetate and methyl acetate; glycols such as propylene glycol, dipropylene glycol monomethyl ether, dipropylene glycol, tripropylene glycol and low molecular weight polyethylene glycol; and alcohols such as ethyl alcohol and isopropanol.
The organic solvent may be used in an amount within a range from 50 to 1,000 parts by weight, based on 100 parts by weight of the total of the monomer.

In an emulsion polymerization, there can be used a method of emulsifying monomers in water in the presence of a polymerization initiator and an emulsifying agent, replacing the atmosphere by nitrogen, and polymerizing with stirring, for example, at the temperature within the range from 50°C to 80°C for 1 hour to 10 hours. The polymerization initiator may be the water-soluble polymerization initiator and/or the oil-soluble polymerization initiator.
In order to obtain a polymer dispersion in water, which is superior in storage stability, it is desirable that the monomers are dispersed in water by using an emulsifying device capable of applying a strong shearing energy (e.g., a high-pressure homogenizer or an ultrasonic homogenizer) and then polymerized with using the water-soluble polymerization initiator. As the emulsifying agent, various emulsifying agents such as an anionic emulsifying agent, a cationic emulsifying agent and a nonionic emulsifying agent can be used in the amount within the range from 0.5 to 10 parts by weight, based on 100 parts by weight of the monomers. When the monomers are not completely compatibilized, a compatibilizing agent (e.g., a water-soluble organic solvent and a low-molecular weight monomer) capable of sufficientiy compatibilizing them is preferably added to these monomers. By the addition of the compatibilizing agent, the emulsifiability and copolymerizability can be improved.

Examples of the water-soluble organic solvent include acetone, methyl ethyl ketone, propylene glycol, dipropylene glycol monomethyl ether, dipropylene glycol, tripropylene glycol and ethanol. The water-soluble organic solvent may be used in the amount within the range from 1 to 8C parts by weight, e.g., from 5 to 50 parts by weight, based on 100 parts by weight of water.

The copolymer thus obtained can be formed into any form such as an emulsion, an organic solvent solution or an aerosol after optionally diluting with or dispersing in water or an organic solvent, and thus a soil release agent can be obtained. The copolymer functions as an active ingredient of the soil release agent. The soil release agent comprises a fluorine-containing copolymer and a medium (particularly, a liquid medium) (for example, an organic solvent and/or water). In the soil release agent, the concentration of the fluorine-containing copolymer may be, for example, from 0.01 to 50% by weight.
The soil release agent of the present invention preferably comprises a fluorine-containing copolymer and an aqueous medium. As used herein, the term "aqueous medium" means a medium comprising only water, and a medium containing, in addition to water, an organic solvent (the amount of the organic solvent is 80 parts by weight or less, for example, 0.1 to 50 parts by weight, particularly 5 to 30 parts by weight, based on 100 parts by weight of water).

The copolymer of the present invention can be applied by using an optional method to a substrate to be treated, as a soil release agent, according to the type of the substrate to be treated and the preparation form (for example, an emulsion, an organic solvent solution, or an aerosol). In the case of an aqueous emulsion or an organic solvent solution, a method of coating on the surface of the treated substrate by using a known method, for example, a coating method such as a dip coating or spray coating method, followed by drying can be employed. In this case, a heat treatment such as curing may be performed, if necessary.
If necessary, another blender can be used in combination. Examples of the blender include water- and oil-repellents, anti-wrinkle agents, anti-shrinkage agents, flame retardants, crosslinking agents, antistatic agents, softening agents, water-soluble polymers such as polyethylene glycol and polyvinyl alcohol, wax emulsions, antibacterial agents, pigments and coating materials. These blenders may be added to a treating bath upon treatment of the substrate. If possible, the blenders may be preliminarily mixed with the copolymer of the present invention.

The article to be treated include a textile, masonry, a filter (for example, an electrostatic filter), a dust protective mask, glass, paper, wood, leather, fur, asbestos, brick, cement, metal and oxide, ceramics, plastics, a coated surface and a plaster, to which the treated article is not limited. The textile may be particularly a carpet. The textile has various examples. Examples of the textile include animal- or vegetable-origin natural fibers such as cotton, hemp, wool and silk; synthetic fibers such as polyamide, polyester, polyvinyl alcohol, polyacrylonitrile, polyvinyl chloride and polypropylene; semi-synthetic fibers such as rayon and acetate; inorganic fibers such as glass fiber, carbon fiber and asbestos fiber; and a mixture of these fibers. The textile may be in any form such as a fiber, a yarn and a fabric.

In the present invention, a substrate is treated with a soil release agent. The term "treatment" means that a treatment agent is applied to a substrate by immersion, spraying, coating or the like. The treatment gives the result that a fluorine-containing copolymer which is an active component of the treatment agent is penetrated into the internal parts of the substrate and/or adhered to surfaces of the substrate.

### EXAMPLES

The present invention is now described in detail by way of Examples, Comparative Examples and Test Examples. However, the present invention is not limited thereto.
In the following Examples, Comparative Examples and Test Examples, parts and percentages are by weight unless otherwise specified.

Tests were performed in the following manner.

### Soil Release Test:

A soil release test was performed in accordance with AATCC Soil Release Management Performance Test Method of the USA. As soils for the test, corn oil, mineral oil or artificial oil is used. The artificial oil was prepared by adding 100 ml of Daphne Mechanic Oil (manufactured by Idemitsu Kosan Co., Ltd.) to 1 g of a paste consisting of 16.7% of carbon black, 20.8% of beef tallow superhardened oil and 62.5% of liquid paraffin.
A test cloth having a size of 20 cm x 20 cm was spread out on a horizontally spread absorbent blotting paper, and five drops of the artificial oil (about 0.2 cc) as the soil were dropped. A glassine paper was laid thereon and a weight of 2,268 g was placed, followed by standing for 60 seconds. After 60 seconds, the weight and the glassine paper were removed, followed by standing at room temperature for 15 minutes. After a lapse of 15 minutes, the test cloth and a ballast cloth (total weight: 1.8 kg) were washed under the conditions of a bath volume of 64 liters and a bath temperature of 38°C for 12 minutes using 100 g of a detergent (an AATCC standard WOB detergent) and an AATCC standard washing machine (manufactured by Kenmore, USA). The clothes were rinsed and then dried by using an AATCC standard tumbler drying machine (manufactured by Kenmore, USA). The state of the remaining soil on the dried test cloth was compared with that of a standard photographic plate for criterion and expressed by the corresponding criteria class (cf. Table 1). As the standard photographic plate for criterion, a photographic plate of AATCC-TM130-2000 (American Association of Textile Chemists and Colorists Test Method 130-2000) was used.

**Table 1: Criteria class of soil releasability**

| Class | Criterion |
|---|---|
| 1.0 | Remarkable soil remains |
| 2.0 | Considerable soil remains |
| 3.0 | Slight soil remains |
| 4.0 | Little soil remains |
| 5.0 | No soil remains |

### Oil-repellency Test:

An oil repellency test was performed in accordance with AATCC-TM118-2000 using a textile. A test cloth was spread out and several drops of a test liquid shown in Table 2 were dropped. It was evaluated by the state of the test liquid which passes the test cloth after 30 seconds. In the case of low oil repellency, an oil soil intrudes into an article to be treated in the air, thus making it difficult to remove the oil soil. Therefore, oil repellency is an important evaluation indicator, similar to a test of soil releasability (SR properties) .

**Table 2: Criteria class of oil repellency**

| Oil repellency | Test liquid | Surface tension (dyne/cm, 25°C) |
|---|---|---|
| 8 | n-heptane | 20.0 |
| 7 | n-octane | 21.8 |
| 6 | n-decane | 23.5 |
| 5 | n-dodecane | 25.0 |
| 4 | n-tetradecane | 26.7 |
| 3 | n-hexadecane | 27.3 |
| 2 | Mixed liquid of hexadecane/Nujor (35/65) | 29.6 |
| 1 | Nujor | 31.2 |
| 0 | Inferior to 1 | - |

### Synthetic Example 1 (9FSO2PA monomer)

### Synthesis of 3-(perfluorobutyl sulfonyl)propyl acrylate

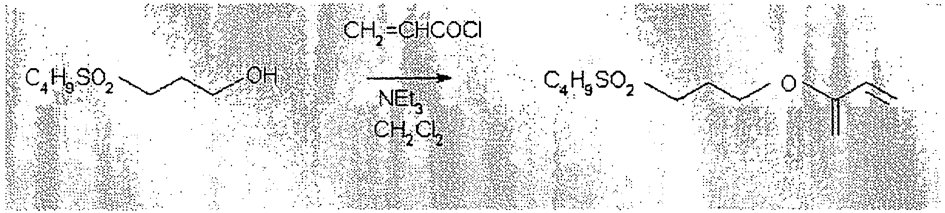

A solution of 3-(perfluorobutylsulfonyl)propanol (54.4 g, 159 mmol), triethylamine (33 ml, 238 mmol), 4-t-butylcatechol (0.14 g) and dichloromethane (520 ml) was cooled to 0°C in an equipment having a calcium chloride tube, and then acryloyl chloride (15.5 ml, 191 mmol) was slowly added dropwise over 40 minutes. After stirring at room temperature for one hour and washing the mixture with a 15% aqueous citric acid solution (600 ml) and a saturated saline solution, the mixture was dried over anhydrous magnesium sulfate, filtered and then concentrated under reduced pressure to give a crude acrylate ester. The residue was purified by silica gel column chromatography (n-hexane:ethyl acetate = 6:1) and the concentrated transparent liquid was vacuum-dried to obtain 60.0 g of 3-(perfluorobutylsulfonyl)propyl acrylate. Yield was 95.3%.

¹H NMR (CDCl₃; internal standard TMS δ ppm): 6.45 (dd, 1H, J_{AB}-1.1 Hz, J_{AX}=17.3 Hz, CH_{A}H_{B}=C) , 6.12 (dd, 1H, J_{AX}=17.3 Hz, J_{BX}=10.5 Hz, C=CH_{X}), 5. 95 (dd, 1H, J_{BX}=10. 5 Hz, J_{AB}=1.1 Hz, CH_{A}H_{B}=C), 4.34 (t, 2H, J_{HH}=6.0 Hz, OCH₂) , 3.41 (t, 2H, JHH=7.8 Hz, CH₂SO₂), 2.36 (tt, 2H, J_{HH}=7.8 Hz, J_{HH}=6.0 Hz, CH₂CH₂CH₂). ¹⁹F NMR (CDCl₃; internal standard CFCl₃ δ ppm) : -81.2 (m, 3F, CF₃), -113.8 (m, 2F, CF₂SO₂), -121.8 (m, 2F, CF₂), -126.3 (m, 2F, CF₂).

Copolymers were produced in the following manner.

### Example 1

Into a 100 ml four-necked flask, 2-(perfluorohexyl)-ethyl acrylate (13FA) (14 g), polyethyleneglycol monoacrylate (EO 10mol) (AE-400) (4.4 g), 2-hydroxyethylacrylate (HEA) (0.6 g), dimethylaminoethyl methacrylate (DMAEM) (0.4 g), acetoacetoxyethyl methacrylate (AAEM) (0.6 g) and isopropyl alcohol (30 g) were charged and nitrogen flow was performed for 60 minutes. After the inner temperature was raised to 75-80°C, azobisisobutyronitrile (0.12 g) was added and the reaction was performed for 8 hours. The resultant polymerization liquid was subjected to a gel permeation chromatography to measure a molecular weight. The measurement revealed that a peak derived from the monomer approximately disappeared and a peak derived from the copolymer was generated. The weight-average molecular weight of the copolymer was 16,000 (in terms of polystyrene). Finally, the resultant polymerization liquid was neutralized by addition of acetic acid (0.153 g) and diluted with water so as to obtain 20% solution of fluorine-containing copolymer.

### Example 2

The same polymerization and analysis as in Example 1 were performed except replacing dimethylaminoethyl methacrylate (DMAEM) in Example 1 with 2-methacryloyloxyethyltrimethyl ammonium chloride (DQ-100). Finally, a 20% fluorine-containing copolymer solution was prepared. The ingredients and the weight-average molecular weight of the copolymer are shown in Table 3.

### Examples 3 to 6

Fluorine-containing copolymer solutions were obtained by repeating the same.procedure as in Example 1 except using the types and weight ratios of the monomers shown in Table 3. If necessary, the solutions were neutralized with a small amount of acetic acid as in Example 1. The ingredients and the weight-average molecular weight of the copolymer are shown in Table 3. In Examples 4 and 5, stearyltrimethyl ammonium chloride was added in the amount of 1.5% by weight, based on the copolymer, during preparation of 20% solution of the fluorine-containing copolymer.

### Example 7

A copolymer solution was obtained by using 9FSO2PA monomer prepared in Synthetic Example 1 and repeating the same procedure as in Example 1 except using the types and weight ratio of the monomers shown in Table 3. Finally, 20% solution of the fluorine-containing copolymer was obtained. The ingredients and the weight-average molecular weight of the copolymer are shown in Table 3.

### Examples 8 to 13

By repeating the same procedure as in Example 1 except using the types and weight ratios of the monomers shown in Table 3, finally, 20% solutions of fluorine-containing copolymer were obtained. If necessary, the solutions were neutralized with a small amount of acetic acid as in Example 1. The ingredients and the weight-average molecular weight of the copolymer are shown in Table 3.

### Comparative Example 1

In a 100 ml four-necked flask, 2-(perfluorohexyl)ethyl acrylate (13FA) (14 g), polyethyleneglycol monoacrylate (EO 10mol) (AE-400) (4.4 g), 2-hydroxyethyl acrylate (HEA) (0.6 g), 2-methacryloyloxyethyltrimethyl ammonium chloride (DQ-100) (0.4 g), 3-chloro-2-hydroxypropyl methacrylate (TM) (0.6 g) and isopropyl alcohol (30 g) were charged and nitrogen flow was performed for 60 minutes. After the inner temperature was raised to 75-80°C, 0.12 g of azobisisobutyronitrile was added and the reaction was performed for 8 hours. The resultant polymerization liquid was subjected to a gel permeation chromatography to measure a molecular weight. The measurement revealed that a peak derived from the monomer approximately disappeared and a peak derived from the copolymer was generated. The weight-average molecular weight of the copolymer was 7,000 (in terms of polystyrene). Finally, the resultant polymerization liquid was diluted with water so as to obtain 20% solution of fluorine-containing copolymer.

### Comparative Examples 2 to 8

Copolymer solutions were obtained by repeating the same procedure as in Example 1 except using the types and weight ratios of the monomers shown in Table 3. If necessary, the solutions were neutralized with a small amount of acetic acid as in Example 1. The ingredients and the weight-average molecular weight of the copolymer are shown in Table 3.
In Comparative Example 4, stearyltrimethyl ammonium chloride was added in the amount of 3% by weight based on the copolymer during preparation of 20% solution of the fluorine-containing copolymer.

### Test Example 1

### Preparation of Treating Solution:

| | |
|---|---|
| 20% Aqueous dispersion of the fluorine-containing copolymer obtained in Example 1 | 11.0 parts |
| NICCA Assist V2 (MDI based blocked Ltd.)isocyanate, NICCA Chemical Co., | 0.25 parts |
| NICCA Sunmarina S-750 (aqueous dispersion of polyethylene wax, NICCA Chemical Co., Ltd.) | 1.70 parts |
| BECKAMINE NS-19 (glyoxal resin, DIC Corporation) | 8.0 parts |
| BECKAMINE X-80 (catalyst for (glyoxal resin, DIC Corporation) | 2.4 parts |
| Tap water | 76.65 parts |

The fluorine-containing copolymer solution and the chemicals of blocked isocyanate and the others in the ratio as shown above were diluted with water, to give a treatment liquid. A 100% cotton twill cloth was immersed in the treatment liquid thus obtained, and then squeezed with a roll, thereby adjusting a wet pickup to 60 mass%. The cloth was dried and heat-treated at 160°C for 3 minutes to complete the treatment with the soil release agent. The soil releasability and the oil repellency of the cloth were measured. The test results are shown in Table 5.
For the purpose of evaluating washing durability, the treated cloth was washed at a normal condition (bath temperature of 40°C and washing time of 12 minutes (without rinsing time) at one washing step) and then tumbler-dried, which was taken as one cycle treatment, in accordance with AATCC Test Method of the USA. Soil releasability and oil repellency of the treated cloth were measured in the same manner also as to the treated cloth which was repeatedly subjected to the above cycle of treatment.
The results are shown in Table 5.

### Test Examples 2 to 13 and Comparative Test Examples 1 to 8

Treatment liquids were prepared by the same procedure as in Test Example 1, except that the 20% aqueous dispersion of the fluorine-containing copolymer was replaced by each of polymer liquids obtained in Examples 2 to 14 and Comparative Examples 1 to 7. The cloth was treated and then soil releasability and oil repellency were measured.
The results are shown in Table 5.

**Table 3**

| | Monomer ingredients | Monomer weight ratio (%) | Weight-average molecular weight of polymer |
|---|---|---|---|
| Example 1 | 13FA/AE-400/HEA/DMAEM/AAEM | 70/22/3/2/3 | 16,000 |
| Example 2 | 13FA/AE-400/HEA/DQ-100/AAEM | 70/22/3/2/3 | 6,000 |
| Example 3 | 13FA/AE-400/HEA/DMAEM/DQ-100/AAEM/TM | 70/20/2.2/1.9/2.0/1.9/2.0 | 9, 000 |
| Example 4 | 13FA/AE-400/DMAEM/AAEM | 70/22/3/5 | 18,000 |
| Example 5 | 13FA/AE-400/HEA/DMAEA/AAEM | 70/22/3/2/3 | 16,000 |
| Example 6 | 13FA/AE-400/HEA/DMAEM/DQ-100/AAEM/TM | 75/15/2.2/1.9/2.0/1.9/2.0 | 8,000 |
| Example 7 | 9FSO2PA/AE-400/HEA/DMAEM/DQ-100/AAEM | 70/20/3/2/2/3 | 6,000 |
| Example 8 | 9FSO2PA/AE-400/HEA/DMAEM/AAEM | 70/20/2/5/3 | 10,000 |
| Example 9 | 9FSO2PA/AE-400/HEA/DMAEM/AAEM | 75/18/2/2/3 | 13,000 |
| Example 10 | 9FS02PA/AE-400/ADE-400/HEA/DMAEA/AAEM | 70/17/3/3/4/3 | 28,000 |
| Example 11 | 9FSO2PA/AE-400/M-230G/HEA/DMAEA/AAEM | 70/10/10/3/4/3 | 15,000 |
| Example 12 | 9FSO2PA/PE-350/PP-800/HEA/DMAEA/AAEM | 70/17/3/3/4/3 | 14,000 |
| Example 13 | 9FSO2PA/AE-400/70PEP-350B/HEA/DMAEA/AAEM | 70/17/3/3/4/3 | 16,000 |
| Comparative Example 1 | 13FA/AE-400/HEA/DQ-100/TM | 70/22/3/2/3 | 7,000 |
| Comparative Example 2 | 13FA/AE-400/HEA/DQ-100/DAAM | 70/22/3/2/3 | 6,000 |
| Comparative Example 3 | 13FA/AE-400/HEA/DQ-100/N-MAM | 70/22/3/2/3 | 8,000 |
| Comparative Example 4 | 13FA/AE-400/HEA/AAEM | 70/22/5/3 | 16,000 |
| Comparative Example 5 | 9FSO2PA/AE-400/HEA/DMAEM/N-NAM | 70/20/5/2/3 | 11,000 |
| Comparative Example 6 | 9FSO2PA/AE-400/HEA/DQ-100/DAAM | 70/20/5/2/3 | 10,000 |
| Comparative Example 7 | 13FA/M-230G/HEMA/DQ-100 | 70/20/8/2 | 12,000 |
| Comparative Example.8 | 19FA/M-230G/PP-800/TM | 55/25/10/10 | 31,000 |

**Table 4 (Explanation of abbreviation in Table 3)**

| | Trade name | Chemical name | Manufacturer |
|---|---|---|---|
| M-230G | NK ESTER M-230G | Methoxypolyethyleneglycol methacryla (EO 23 mol) | Shin-nakamura Chemical Co., Ltd. |
| TM | TOPOLENE M | 3-Chloro-2-hydroxypropyl methacrylate | Shin-nakamura Chemical Co., Ltd. |
| DQ-100 | LIGHT-ESTER DQ-100 | 2-Methacryloyloxyethyltrimethyl ammonium chloride | Kyoeisha Chemical Co., Ltd. |
| DMAEA | | Dimethylaminoethyl acrylate | Kohjin Co., Ltd. |
| DMAEM | LIGHT-ESTER DM | Dimethylaminoethyl methacrylate | Kyoeisha Chemical Co., Ltd. |
| AAEM | AAEM | Acetoacetoxyethyl methacrylate | Eastman Chemical Japan Co., Ltd |
| H-MAM | | N-Methylol acrylamide | SOKEN CHEMICAL & ENGINEERING CO., LTD. |
| DAAM | | Diacetone acrylamide | Kyowa Hakko Kogyo Co Ltd. |
| HEA | | 2-Hydroxyethyl acrylate | |
| ADE-400 | BLEMMER ADE-400 | Polyethyleneglycol diacrylate (EO 9 mol) | NOF Corporation |
| AE-400 | BLEMMER AE-400 | Polyethyleneglycol monoacrylate (EO 10 mol) | NOF Corporation |
| PE-350 | BLEMMER PE-350 | Polyethyleneglycol monomethacrylate (EO 8 mol) | NOF Corporation |
| PP-800 | BLEMMER PP-800 | Polypropyleneglycol monomethacrylate (PO 13 mol) | NOF Corporation |
| 70PEP-350B | BLEMMER 70PEP-350B | Polyethyleneglycol polypropyleneglycol monomethacrylate (EO 5, PO 2) | NOF Corporation |
| 9FSO2PA | | 2-(Perfluorobutylsulfonyl)propyl acrylate | |
| 13FA | | 2-(Perfluorohexyl)ethyl acrylate | |
| 19FA | | 2-(Perfluorooctyl)ethyl acrylate | |

**Table 5**

| | Oil repellency | | | SR properties | | | | | | | | |
|---|---|---|---|---|---|---|---|---|---|---|---|---|
| | | | | corn oil | | | mineral oil | | | artificial oil | | |
| | Initial | HL10 | HL20 | Initial | HL10 | HL20 | Initial | H10 | HL20 | Initial HL10 | | H20 |
| Example 1 | 5 | 5 | 3 | 5 | 5 | 4-5 | 5 | 5 | 4-5 | 3-4 | 3-4 | 3 |
| Example 2 | 5 | 4-5 | 1 | 5 | 5 | 4-5 | 5 | 5 | 4 | 3-4 | 3-4 | 3 |
| Example 3 | 5 | 4 | 3 | 5 | 5 | 4-5 | 5 | 5 | 4-5 | 4-5 | 4-5 | 3-4 |
| Example 4 | 5 | 5 | 4 | 5 | 5 | 4-5 | 5 | 5 | 4 | 3-4 | 3 | 3 |
| Example 5 | 5 | 5 | 2 | 5 | 4-5 | 4 | 5 | 4 | 4 | 4-5 | 3 | 3 |
| Example 6 | 5 | 4-5 | 4-5 | 5 | 5 | 4-5 | 5 | 5 | 4-5 | 4 | 4 | 3-4 |
| Example 7 | 5 | 4-5 | 2 | 5 | 4-5 | 4 | 5 | 5 | 4 | 3-4 | 3-4 | 3 |
| Example 8 | 5 | 4 | 2 | 5 | 4-5 | 4 | 5 | 4-5 | 4 | 3-4 | 3-4 | 3 |
| Example 9 | 5 | 4 | 2 | 5 | 5 | 4-5 | 5 | 4-5 | 4 | 3-4 | 3 | 3 |
| Example 10 | 5 | 4-5 | 2 | 5 | 4-5 | 4 | 5 | 4-5 | 4 | 3-4 | 3-4 | 3 |
| Example 11 | 5 | 4-5 | 2 | 5 | 5 | 4 | 5 | 4-5 | 4 | 3-4 | 3-4 | 3 |
| Example 12 | 5 | 4 | 2 | 5 | 4-5 | 4 | 5 | 4-5 | 4 | 4 | 3-4 | 3 |
| Example 13 | 5 | 4 | 2 | 5 | 5 | 4-5 | 5 | 5 | 4-5 | 3-4 | 3-4 | 3 |
| Comparative Example 1 | 5 | 3 | 0 | 5 | 4-5 | 3 | 5 | 4-5 | 3 | 3 | 3 | 2-3 |
| Comparative Example 2 | 5 | 2-3 | 0 | 5 | 4-5 | 2-3 | 5 | 4-5 | 3 | 3-4 | 3 | 2-3 |
| Comparative Example 3 | 5 | 2 | 0 | 5 | 4-5 | 3-4 | 5 | 4-5 | 2-3 | 3 | 3 | 2-3 |
| Comparative Example 4 | 4 | 2 | 0 | 5 | 4 | 3 | 5 | 3 | 2-3 | 2-3 | 2-3 | 2 |
| Comparative Example 5 | 5 | 2 | 0 | 5 | 4 | 3 | 5 | 3-4 | 3 | 3-4 | 3 | 2 |
| Comparative Example 6 | 5 | 2 | 0 | 5 | 4 | 3 | 5 | 3-4 | 3 | 3-4 | 2-3 | 2 |
| Comparative Example 7 | 5 | 1 | 0 | 5 | 3-4 | 3 | 5 | 3-4 | 2-3 | 3 | 2-3 | 2-3 |
| comparative Example 7 | 5 | 1 | 0 | 5 | 3-4 | 2 | 3-4 | 2 | 2 | 3 | 2-3 | 2 |
| Non-treated cloth | 0 | 0 | 0 | 1 | 1 | 1 | 1 | 1 | 1 | 1 | 1 | 1 |

| | | | | | | | | | | | | |
|---|---|---|---|---|---|---|---|---|---|---|---|---|
| Note) The number A-number B in the table means an intermediate performance between A and B. Each of HL10 and HL20 means each of ten times and twenty times after washed, respectively. | | | | | | | | | | | | |

## Claims

1. A fluorine-containing copolymer comprising repeating units derived from:
(a) a fluorine monomer having a fluoroalkyl group,
(b) a polyalkyleneglycol (meth)acrylate,
(c) a monomer having an acetoacetyl group, and
(d) a monomer having a cation-donating group.

2. The copolymer of Claim 1, wherein monomer (a) is represented by the general formula:
CH₂=C(-X)-C(=O)-Y-Z-Rf (1)
wherein
X is H, linear or branched C₁₋₂₁-alkyl, F, Cl, Br, I, CFX¹X² (wherein X¹ and X² each is H, F, Cl, Br or I), cyano, linear or branched C₁₋₂₁-fluoroalkyl, or optionally substituted benzyl or phenyl;
Y is -O- or -NH-;
Z is an aliphatic C₁₋₁₀-group, an aromatic or cycloaliphatic C₆₋₁₈-group, -CH₂CH₂N(R¹)SO₂-(wherein R¹ is C₁₋₄-alkyl), -CH₂CH(OZ¹)CH₂-(wherein Z¹ is H or acetyl) or -(CH₂)ₘ-SO₂-(CH₂)ₙ-or -(CH₂)ₘ-S-(CH₂)ₙ- (wherein m is 1-10 and n is 0-10),
Rf is linear or branched C₁₋₂₁-fluoroalkyl.

3. The copolymer of Claim 2, wherein Rf in monomer (a) is a perfluoroalkyl group.

4. The copolymer of Claim 3, wherein Rf in monomer (a) is C₁₋₆-perfluoroalkyl.

5. The copolymer of any of Claims 1-4, wherein monomer (b) is represented by one or both of the general formulae:
CH₂=CX¹C (=O) -O- (RO) ₙ-X² (3a)
CH₂=CX¹C (=O) -O- (RO) ₙ-C (=O) CX¹=CH₂ (3b)
wherein
X¹ is H or methyl,
X² is H or an unsaturated or saturated C₁₋₂₂-hydrocarbon group,
R is C₂₋₆-alkylene, and
n is an integer of 2-90.

6. The copolymer of any of Claims 1-5, wherein monomer (c) is a compound having a carbon-carbon double bond, and preferably is selected from acetoacetoxyethyl acrylate, acetoacetoxyethyl methacrylate, acetoacetoxypropyl acrylate, acetoacetoxypropyl methacrylate, N-(2-acetoacetoxyethyl) acrylamide, N-(2-acetoacetoxyethyl) methacrylamide, vinyl acetoacetate and allyl acetoacetate.

7. The copolymer of any of Claims 1-6, wherein the monomer (d) is a compound having a cation-donating group and a carbon-carbon double bond.

8. The copolymer of Claim 7, wherein the cation-donating group in monomer (d) is a tertiary amino group and a quaternary amino group, and preferably is selected from CH₂=CHCOO - CH₂CH₂ -N (CH₃)₂,
CH₂ = CHCOO - CH₂ CH₂ - N (CH₂CH₃)₂,
CH₂ =C (CH3) COO - CH₂CH₂ - N (CH₃) ₂,
CH₂=C (CH₃) COO-CH₂CH₂-N (CH₂CH₃)₂,
CH₂=CHC (O) N (H) -CH₂CH₂CH₂-N (CH₃)₂,
CH₂=CHCOO-CH₂CH₂-N(-CH₃) (-CH₂-C₆H₅),
CH₂=C (CH₃) COO-CH₂CH₂-N(-CH₂CH₃) (-CH₂-C₆H₅),
a salt of any of the foregoing compounds (preferably an acetate salt),
CH₂=CHCOO-CH₂CH₂-N⁺ (CH₃)₃Cl⁻,
CH₂=CHCOO-CH₂CH₂-N⁺(-CH₃)₂(-CH₂-C₆Hs) Cl⁻,
CH₂=C (CH₃) COO-CH₂CH₂-N⁺ (CH₃)₃Cl⁻,
CH₂=CHCOO-CH₂CH (OH) CH₂-N⁺ (CH₃)₃Cl⁻,
CH₂=C(CH₃) COO-CH₂CH (OH) CH₂-N⁺ (CH₃) ₃Cl⁻,
CH₂=C (CH₃) COO-CH₂CH (OH) CH₂-N⁺(-CH₂CH₃)₂(-CH₂-C₆H₅) Cl⁻,
CH₂=C (CH₃) COO-CH₂CH₂-N⁺ (CH₃) ₃Br⁻,
CH₂=C (CH₃) COO-CH₂CH₂-N⁺ (CH₃)₃I⁻,
CH₂=C (CH₃) COO-CH₂CH₂-N⁺ (CH₃)₃O⁻SO₃CH₃ and
CH₂=C (CH₃) COO-CH₂CH₂-N⁺ (CH₃) (-CH₂-C₆H₅)₂Br⁻.

9. The copolymer of any of Claims 1-8, which contains 18-88 wt.-% of monomer (a), 10-80 wt.-%of monomer (b), 0.5-10 wt.-% of monomer (c), and 0.1-10 wt.-% of monomer (d).

10. A composition comprising:
(I) the fluorine-containing copolymer of any of Claims 1-9, and
(II) a crosslinking agent.

11. The composition of Claim 10, wherein the crosslinking agent (II) is a compound having a group reacting with active hydrogen, which preferably is selected from isocyanate, glycidyl and -CH₂-O-R (wherein R is H or an aliphatic C₁₋₁₀-group).

12. The composition of Claim 10 or 11, wherein the crosslinking agent (II) is a compound having an isocyanate group, a blocked isocyanate group or a methylol group.

13. A soil release agent comprising the copolymer of any of Claims 1-9 or the composition of any of Claims 10-12, and optionally an aqueous medium.

14. A method of treating a substrate, comprising treating the substrate with the soil release agent of Claim 13.

15. A textile which is treated with the soil release agent of Claim 13.

## Patentansprüche

1. Fluor enthaltendes Copolymer, das Wiederholungseinheiten umfasst, abgeleitet von:
(a) einem Fluormonomer mit einer Fluoroalkylgruppe,
(b) einem Polyalkylenglycol(meth)acrylat,
(c) einem Monomer mit einer Acetoacetylgruppe und
(d) einem Monomer mit einer Kation-Donatorgruppe.

2. Copolymer gemäß Anspruch 1, worin das Monomer (a) durch die allgemeine Formel dargestellt wird:
CH₂=C(-X)-C(=O)-Y-Z-Rf (1)
worin
X H, lineares oder verzweigtes C₁₋₂₁-Alkyl, F, Cl, Br, I, CFX¹X² (worin X¹ und X² jeweils H, F, Cl, Br oder 1 ist), Cyano, lineares oder verzweigtes C₁₋₂₁-Fluoroalkyl oder optional substituiertes Benzyl oder Phenyl ist;
Y -O- oder -NH- ist;
Z eine aliphatische C₁₋₁₀-Gruppe, eine aromatische oder cycloaliphatische C₆₋₁₈-Gruppe, -CH₂CH₂N(R¹)SO₂- (worin R¹ C₁₋₄-Alkyl ist), -CH₂CH(OZ¹)CH₂- (worin Z¹ H oder Acetyl ist) oder -(CH₂)ₘ-SO₂-(CH₂)ₙ- oder -(CH₂)ₘ-S-(CH₂)ₙ- (worin m 1 bis 10 ist und n 0 bis 10 ist) ist,
Rf lineares oder verzweigtes C₁₋₂₁-Fluoroalkyl ist.

3. Copolymer gemäß Anspruch 2, worin Rf in Monomer (a) eine Perfluoralkylgruppe ist.

4. Copolymer gemäß Anspruch 3, worin Rf in Monomer (a) C₁₋₆-Perfluoroalkyl ist.

5. Copolymer gemäß irgendeinem der Ansprüche 1 bis 4, worin das Monomer (b) durch eine oder beide der allgemeinen Formeln dargestellt wird:
CH₂=CX¹C(=O)-O-(RO)ₙ-X² (3a)
CH₂=CX¹C(=0)-0-(RO)ₙ-C(=0)CX¹=CH₂ (3b)
worin
X¹ H oder Methyl ist,
X² H oder eine ungesättigte oder gesättigte C₁₋₂₂-Kohlenwasserstoffgruppe ist,
R C₂₋₆-Alkylen ist und
n eine ganze Zahl von 2 bis 90 ist.

6. Copolymer gemäß irgendeinem der Ansprüche 1 bis 5, worin das Monomer (c) eine Verbindung mit einer Kohlenstoff-Kohlenstoff-Doppelbindung ist, und vorzugsweise aus Acetoacetoxyethylacrylat, Acetoacetoxyethylmethacrylat, Acetoacetoxypropylacrylat, Acetoacetoxypropylmethacrylat, N-(2-Acetoacetoxyethyl)acrylamid, N-(2-Acetoacetoxyethyl)methacrylamid, Vinylacetoacetat und Allylacetoacetat ausgewählt ist.

7. Copolymer gemäß irgendeinem der Ansprüche 1 bis 6, worin das Monomer (d) eine Verbindung mit einer Kation-Donatorgruppe und einer Kohlenstoff-Kohlenstoff-Doppelbindung ist.

8. Copolymer gemäß Anspruch 7, worin die Kation-Donatorgruppe in Monomer (d) eine tertiäre Aminogruppe und eine quaternäre Aminogruppe ist, und vorzugsweise ausgewählt ist aus
CH₂=CHCOO-CH₂CH₂-N(CH₃)₂,
CH₂=CHCOO-CH₂CH₂-N(CH₂CH₃)₂,
CH₂=C(CH₃)COO-CH₂CH₂-N(CH₃)_{2,}
CH₂=C(CH₃)COO-CH₂CH₂-N(CH₂CH₃)₂,
CH₂=CHC(O)N(H)-CH₂CH₂CH₂-N(CH₃)₂,
CH₂=CHCOO-CH₂CH₂-N(-CH₃)(-CH₂-C₆H₅),
CH₂=C(CH₃)COO-CH₂CH₂-N(-CH₂CH₃)(-CH₂-C₆H₅),
ein Salz der vorgenannten Verbindung (vorzugsweise ein Acetatsalz),
CH₂=CHCOO-CH₂CH₂-N⁺(CH₃)₃Cl⁻,
CH₂=CHCOO-CH₂CH₂-N⁺(-CH₃)₂(-CH₂-C₆H₅)Cl⁻,
CH₂=C(CH₃)COO-CH₂CH₂-N⁺(CH₃)₃Cl⁻,
CH₂=CHCOO-CH₂CH(OH)CH₂-N⁺(CH₃)₃Cl⁻,
CH₂=C(CH₃)COO-CH₂CH(OH)CH₂-N⁺(CH₃)₃Cl⁻,
CH₂=C(CH₃)COO-CH₂CH(OH)CH₂-N⁺(-CH₂CH₃)₂(-CH₂-C₆H₅)Cl⁻,
CH₂=C(CH₃)COO-CH₂CH₂-N⁺(CH₃)₃Br⁻,
CH₂=C(CH₃)COO-CH₂CH₂-N⁺(CH₃)₃I⁻,
CH₂=C(CH₃)COO-CH₂CH₂-N⁺(CH₃)₃O⁻SO₃CH₃ und
CH₂=C(CH₃)COO-CH₂CH₂-N⁺(CH₃)(-CH₂-C₆H₅)₂Br⁻.

9. Copolymer gemäß irgendeinem der Ansprüche 1 bis 8, das 18 bis 88 Gew.% des Monomers (a), 10 bis 80 Gew.% des Monomers (b), 0,5 bis 10 Gew.% des Monomers (c) und 0,1 bis 10 Gew.% des Monomers (d) enthält.

10. Zusammensetzung, umfassend:
(I) das Fluor enthaltende Copolymer gemäß irgendeinem der Ansprüche 1 bis 9 und
(II) ein Vernetzungsmittel.

11. Zusammensetzung gemäß Anspruch 10, worin das Vernetzungsmittel (II) eine Verbindung mit einer Gruppe ist, die mit aktivem Wasserstoff reagiert, vorzugsweise ausgewählt aus Isocyanat, Glycidyl und -CH₂-O-R (worin R H oder eine aliphatische C₁₋₁₀-Gruppe ist).

12. Zusammensetzung gemäß Anspruch 10 oder 11, worin das Vernetzungsmittel (II) eine Verbindung ist, die eine Isocyanatgruppe, eine geblockte Isocyanatgruppe oder eine Methylolgruppe aufweist.

13. Schmutzfreisetzungsmittel, das das Copolymer gemäß irgendeinem der Ansprüche 1 bis 9 oder die Zusammensetzung gemäß irgendeinem der Ansprüche 10 bis 12 und optional ein wässriges Medium umfasst.

14. Verfahren zum Behandeln eines Substrats, das das Behandeln des Substrats mit dem Schmutzfreisetzungsmittel gemäß Anspruch 13 umfasst.

15. Textilmaterial, das mit dem Schmutzfreisetzungsmittel gemäß Anspruch 13 behandelt ist.

## Revendications

1. Copolymère contenant du fluor comprenant des unités répétitives dérivées de :
(a) un monomère à base de fluor comportant un groupe fluoroalkyle,
(b) un (méth)acrylate de polyalkylèneglycol,
(c) un monomère comportant un groupe acétoacétyle, et
(d) un monomère comportant un groupe donneur de cations.

2. Copolymère selon la revendication 1, dans lequel le monomère (a) est représenté par la formule générale :
CH₂=C(-X)-C(=O)-Y-Z-Rf (1)
dans laquelle
X représente un atome d'H, un groupe alkyle en C₁ à C₂₁, linéaire ou ramifié, un atome de F, de Cl, de Br ou d'l, un groupe CFX¹X² (dans lequel X¹ et X² représentent chacun un atome d'H, de F, de Cl, de Br ou d'I), un groupe cyano, un groupe fluoroalkyle en C₁ à C₂₁, linéaire ou ramifié, ou un groupe benzyle ou phényle optionnellement substitué ;
Y représente un groupe -O- ou -NH- ;
Z représente un groupe aliphatique en C₁ à C₁₀, un groupe en C₆ à C₁₈, aromatique ou cycloaliphatique, ou un groupe -CH₂CH₂N(R¹)SO₂- (dans lequel R¹ représente un groupe alkyle en C₁ à C₄), -CH₂CH(OZ¹)CH₂- (dans lequel Z¹ représente un atome d'H ou un groupe acétyle) ou -(CH₂)ₘ,-SO₂-(CH₂)ₙ- ou -(CH₂)ₘ-S-(CH₂)ₙ- (dans lequel m vaut de 1 à 10 et n vaut de 0 à 10),
Rf représente un groupe fluoroalkyle en C₁ à C₂₁, linéaire ou ramifié.

3. Copolymère selon la revendication 2, dans lequel Rf dans le monomère (a) représente un groupe perfluoroalkyle.

4. Copolymère selon la revendication 3, dans lequel Rf dans le monomère (a) représente un groupe perfluoroalkyle en C₁ à C₆.

5. Copolymère selon l'une quelconque des revendications 1 à 4, dans lequel le monomère (b) est représenté par l'une et/ou l'autre des formules générales :
CH₂-CX¹C(=O)-O-(RO)ₙ-X² (3a)
CH₂=CX¹C(=O)-O-(RO)ₙ-C(=O)CX¹=CH₂ (3b)
formules dans lesquelles
X¹ représente un atome d'H ou un groupe méthyle,
X² représente un atome d'H ou un groupe hydrocarbure en C₁ à C₂₂, insaturé ou saturé,
R représente un groupe alkylène en C₂ à C₆, et
n représente un nombre entier de 2 à 90.

6. Copolymère selon l'une quelconque des revendications 1 à 5, dans lequel le monomère (c) est un composé comportant une double liaison carbone-carbone, et est de préférence choisi parmi l'acrylate d'acétoacétoxyéthyle, le méthacrylate d'acétoacétoxyéthyle, l'acrylate d'acétoacétoxypropyle, le méthacrylate d'acétoacétoxypropyle, le N-(2-acétoacétoxyéthyl)acrylamide, le N-(2-acétoacétoxyéthyl)méthacrylamide, l'acétoacétate de vinyle et l'acétoacétate d'allyle.

7. Copolymère selon l'une quelconque des revendications 1 à 6, dans lequel le monomère (d) est un composé comportant un groupe donneur de cations et une double liaison carbone-carbone.

8. Copolymère selon la revendication 7, dans lequel le groupe donneur de cations dans le monomère (d) est un groupe amino tertiaire et un groupe amino quaternaire, et est de préférence choisi parmi
CH₂=CHCOO-CH₂CH₂-N(CH₃)₂,
CH₂=CHCOO-CH₂CH₂-N(CH₂CH₃)₂,
CH₂=C(CH₃)COO-CH₂CH₂-N(CH₃)₂,
CH₂=C(CH₃)COO-CH₂CH₂-N(CH₂CH₂)₂,
CH₂=CHC(O)N(H)-CH₂CH₂CH₂-N(CH₃)₂,
CH₂=CHCOO-CH₂CH₂-N(-CH₃)(-CH₂-C₆H₅),
CH₂=C(CH₃)COO-CH₂CH₂-N(-CH₂CH₃)(-CH₂-C₆H₅),
un sel de l'un quelconque des composés précédents (de préférence un sel d'acétate),
CH₂=CHCOO-CH₂CH₂-N⁺(CH₃)₃Cl⁻,
CH₂=CHCOO-CH₂CH₂-N⁺(-CH₃)₂(-CH₂-C₆H₅)Cl⁻,
CH₂=C(CH₃)COO-CH₂CH₂-N⁺(CH₃)₃Cl⁻,
CH₂=CHCOO-CH₂CH(OH)CH₂-N⁺(CH₃)₃Cl⁻,
CH₂=C(CH₃)COO-CH₂CH(OH)CH₂-N⁺(CH₃)₃Cl⁻,
CH₂=C(CH₃)COO-CH₂CH(OH)CH₂-N⁺(-CH₂CH₃)₂(-CH₂-C₆H₅)Cl⁻,
CH₂=C(CH₃)COO-CH₂CH₂-N⁺(CH₃)₃Br⁻,
CH₂=C(CH₃)COO-CH₂CH₂-N⁺(CH₃)₃1⁻,
CH₂=C(CH₃)COO-CH₂CH₂-N⁺(CH₃)₃0⁻S0₃CH₃ et
CH₂=C(CH₃)COO-CH₂CH₂-N⁺(CH₃)(-CH₂-C₆H₅)₂Br⁻.

9. Copolymère selon l'une quelconque des revendications 1 à 8, qui contient de 18 à 88 % en poids de monomère (a), de 10 à 80 % en poids de monomère (b), de 0,5 à 10 % en poids de monomère (c) et de 0,1-10 % en poids de monomère (d).

10. Composition comprenant:
(I) le copolymère contenant du fluor selon l'une quelconque des revendications 1 à 9, et
(II) un agent de réticulation.

11. Composition selon la revendication 10, dans laquelle l'agent de réticulation (II) est un composé comportant un groupe réagissant avec l'hydrogène actif, qui est de préférence choisi parmi les groupes isocyanate, glycidyle et -CH₂-OR (dans lequel R représente un atome d'H ou un groupe aliphatique en C₁ à C₁₀).

12. Composition selon la revendication 10 ou 11, dans laquelle l'agent de réticulation (II) est un composé comportant un groupe isocyanate, un groupe isocyanate bloqué ou un groupe méthylol.

13. Agent d'élimination des salissures comprenant le copolymère selon l'une quelconque des revendications 1 à 9 ou la composition selon l'une quelconque des revendications 10 à 12, et optionnellement un milieu aqueux.

14. Procédé de traitement d'un substrat, comprenant le traitement du substrat avec l'agent d'élimination des salissures selon la revendication 13.

15. Textile qui est traité par l'agent d'élimination des salissures selon la revendication 13.
